# EUROPEAN PATENT APPLICATION

(11) **EP 4 773 322 A1**
(43) Date of publication of application: **08.07.2026**
(21) Application number: 24859719.7
(22) Date of filing: 26.08.2024
(51) Int. Cl.: H01M 10/0587, H01M 50/414, H01M 50/443, H01M 50/446, H01M 50/451, H01M 50/46, H01M 50/463

(54) **LITHIUM SECONDARY BATTERY**

(30) Priority: 31.08.2023 JP 2023141237
(71) Applicant: Panasonic Intellectual Property Management Co., Ltd., Kadoma-shi, Osaka 571-0057 (JP)
(72) Inventor: KONDO, Shinichiro, Kadoma-shi, Osaka 571-0057 (JP); MIYAMAE, Ryohei, Kadoma-shi, Osaka 571-0057 (JP); KANO, Akira, Kadoma-shi, Osaka 571-0057 (JP)
(74) Representative: Novagraaf International SA
(86) International application number: PCT/JP2024/030327
(87) International publication number: WO 2025/047687

(57) **Abstract**

A lithium secondary battery includes an electrode group including a positive electrode, a negative electrode at which Li deposits during charging, and a separator, which are wound together. The separator includes a first separator (second separator) disposed on the inner layer side (outer layer side) of the positive electrode. The first separator (second separator) includes a first substrate (second substrate), and a first protruding portion (second protruding portion). The positive electrode has a region PL at the Lth layer from a winding-start end portion of the positive electrode. The ratio of an area ALt (BLt) of a portion overlapping the first protruding portion (second protruding portion) in a region S1L (S2L) in the first substrate (second substrate) facing the inner layer side (outer layer side) of the region PL, to an area AL (BL) of the region S1L (S2L) is denoted by XL (YL). The values of the XL (YL) corresponding to the regions P1 to Pn where L = 1 to n (n is an integer of 3 or more) are represented by X1 to Xn (Y1 to Yn), the X1 (Y1) is smaller than at least one of the X2 to Xn (Y2 to Yn).

## Description

### [Technical Field]

The present disclosure relates to a lithium secondary battery.

### [Background Art]

Lithium ion batteries have been known as nonaqueous electrolyte secondary batteries having high capacity. As nonaqueous electrolyte secondary batteries superior in capacity than lithium ion batteries, lithium secondary batteries (lithium metal secondary batteries) are promising. In a lithium secondary battery, lithium metal deposits on the negative electrode during charging, and the lithium metal dissolves during discharging to be released as lithium ions into the nonaqueous electrolyte.

In a lithium secondary battery, since lithium metal deposits on the negative electrode during charging, it is necessary to provide a spacer between the positive electrode and the negative electrode, to ensure a space for lithium to deposit.

Patent Literature 1 proposes "a lithium secondary battery, comprising: a positive electrode; a negative electrode; a separator disposed between the positive electrode and the negative electrode; and a nonaqueous electrolyte having lithium ion conductivity, wherein lithium metal deposits on the negative electrode during charging, and the lithium metal dissolves from the negative electrode during discharging, a spacer is provided between the separator and at least one of the positive electrode and the negative electrode, a first length of the separator in a first direction D 1 is shorter than a second length of the separator in a second direction D2 intersecting the first direction D1, and in a cross section of the spacer taken along a thickness direction of the separator and the first direction D1, at least one of an angle on the spacer side formed between the separator and the spacer and an angle on the spacer side formed between the spacer and the electrode in contact with the spacer is greater than 90°."

### [Citation List]

### [Patent Literature]

Patent Literature 1: International Publication WO 2021/192645

### [Summary of Invention]

### [Technical Problem]

In a wound electrode group, a stress generated by the Li deposition on the negative electrode is concentrated locally at the innermost layer of the positive electrode, and this damages the substrate, to cause an internal short circuit in some cases.

### [Solution to Problem]

One aspect of the present disclosure relates to a lithium secondary battery, including: an electrode group including a positive electrode, a negative electrode, and a separator disposed between the positive electrode and the negative electrode, which are wound together; and a nonaqueous electrolyte, wherein at the negative electrode, lithium metal deposits during charging, and the lithium metal dissolves during discharging, the separator includes a first separator disposed on an inner layer side of the positive electrode and a second separator disposed on an outer layer side of the positive electrode, the first separator includes a sheet-like first substrate, and a first spacer disposed on a principal surface of the first substrate, the first spacer including a first protruding portion, the second separator includes a sheet-like second substrate, and a second spacer disposed on a principal surface of the second substrate, the second spacer including a second protruding portion, the positive electrode has a region PL at an Lth layer from a winding-start end portion of the positive electrode, and when a ratio ALt/AL of an area ALt of a portion overlapping the first protruding portion in a region S1L in the first substrate facing an inner layer side of the region PL, to an area AL of the region S1L is denoted by XL, a ratio BLt/BL of an area BLt of a portion overlapping the second protruding portion in a region S2L in the second substrate facing an outer layer side of the region PL, to an area BL of the region S2L is denoted by YL, and values of the XL and the YL corresponding to the regions P1 to Pn where L = 1 to n (n is an integer of 3 or more) are represented by X1 to Xn and Y1 to Yn, respectively, the X1 is smaller than at least one of the X2 to Xn, and the Y1 is smaller than at least one of the Y2 to Xn.

### [Advantageous Effects of Invention]

According to the present disclosure, it is possible to suppress the occurrence of an internal short circuit in a lithium secondary battery.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1] A schematic longitudinal sectional view of an example of a lithium secondary battery according to an embodiment of the present disclosure.
[FIG. 2] A schematic sectional view of an essential part of the lithium secondary battery of FIG. 1.
[FIG. 3] A schematic top view of a positive electrode in an electrode group as viewed in the winding axis direction.
[FIG. 4] A top view of an example of a spacer.
[FIG. 5] A top view of another example of the spacer.
[FIG. 6] A top view of yet another example of the spacer.
[FIG. 7] A top view of a spacer included in the conventional lithium secondary battery.

### [Description of Embodiments]

Embodiments of the present disclosure will be described below by way of examples, but the present disclosure is not limited to the examples described below. In the following description, specific numerical values and materials are exemplified in some cases, but other numerical values and other materials may be adopted as long as the effects of the present disclosure can be obtained. In the present specification, the phrase "a numerical value A to a numerical value B" means to include the numerical value A and the numerical value B, and can be rephrased as "a numerical value A or more and a numerical value B or less." In the following description, when the lower and upper limits of numerical values related to specific physical properties, conditions, etc. are mentioned as examples, any one of the mentioned lower limits and any one of the mentioned upper limits can be combined in any combination as long as the lower limit is not equal to or more than the upper limit. When a plurality of materials are mentioned as examples, one kind of them may be selected and used singly, or two or more kinds of them may be used in combination.

A lithium secondary battery according to an embodiment of the present disclosure includes an electrode group including a positive electrode, a negative electrode, and a separator disposed between the positive and negative electrodes, which are wound together; and a nonaqueous electrolyte. At the negative electrode, lithium metal deposits during charging, and the lithium metal dissolves during discharging. Specifically, the negative electrode includes at least a negative electrode current collector, and lithium metal deposits on the negative electrode current collector during charging. The nonaqueous electrolyte has lithium ion conductivity. Lithium secondary batteries are also called lithium metal secondary batteries.

In the lithium secondary battery, 70% or more, for example, of the rated capacity is exhibited through deposition and dissolution of lithium metal. The migration of electrons at the negative electrode during charging and during discharging is mainly due to the deposition and the dissolution of lithium metal at the negative electrode. Specifically, 70 to 100% (e.g., 80 to 100%, 90 to 100%) of the migration of electrons (in another aspect, electric current) at the negative electrode during charging and during discharging is due to deposition and dissolution of lithium metal. That is, the negative electrode of the lithium secondary battery differs from the negative electrode in which the migration of electrons at the negative electrode during charging and during discharging is mainly due to absorption and release of lithium ions by the negative electrode active material (graphite etc.).

The electrode group is constituted by winding a belt-shaped positive electrode and a belt-shaped negative electrode, with a separator (belt-shaped substrate) interposed therebetween. In the electrode group, the positive electrode and the negative electrode are wound such that the negative electrode is disposed on both sides (inner layer side and outer layer side) of the positive electrode, with the separator interposed therebetween in all regions (regions P1 to Pn described below) of the positive electrode. The separator include a first separator disposed on the inner layer side of the positive electrode, and a second separator disposed on the outer layer side of the positive electrode. The first separator includes a sheet-like first substrate, and a first spacer disposed on a principal surface of the first substrate, and the first spacer includes a first protruding portion. The second separator includes a sheet-like second substrate, and a second spacer disposed on a principal surface of the second substrate, and the second spacer includes a second protruding portion. Hereinafter, the items common to the first separator and the second separator may be simply referred to as the "separator", "substrate", "spacer", and "protruding portion".

In the electrode group, the first protruding portion and the second protruding portion may be disposed so as to be overlapped with each other across the positive electrode, or may be disposed so as to be displaced from each other entirely or partially across the positive electrode. The disposing patterns of the first spacer and the second spacer may be the same or different. For example, one of the first spacer and the second spacer may be in a stripe pattern, and the other of the first spacer and the second spacer may be in a honeycomb pattern.

The positive electrode has a region PL at the Lth layer from the winding-start end portion of the positive electrode. A ratio ALt/AL of an area ALt of a portion overlapping the first protruding portion in a region S1L in the first substrate facing the inner layer side of the region PL, to an area AL of the region S1L is denoted by XL, and a ratio BLt/BL of an area BLt of a portion overlapping the second protruding portion in a region S2L in the second substrate facing the outer layer side of the region PL, to an area BL of the region S2L is denoted by YL. The values of the XL and the YL corresponding to regions P1 to Pn where L = 1 to n (n is an integer of 3 or more) are represented by X1 to Xn and Y1 to Yn, respectively. At this time, the X1 is smaller than at least one of the X2 to Xn. The Y1 is smaller than at least one of the Y2 to Xn. In other words, the X1 and the Y1 are not the maximum value among the X1 to Xn and among the Y1 to Yn, respectively. The region P1 corresponds to an innermost layer portion of the positive electrode, and the region Pn corresponds to an outermost layer portion of the positive electrode. The XL may be substantially the same as or different from the YL. For example, the X1 may be substantially the same as or different from the Y1.

The positive electrode may include a positive electrode current collector, and a positive electrode mixture layer supported on each of both surfaces of the positive electrode current collector. In this case, the region S1L (S2L) is a region of the first substrate (second substrate) facing the positive electrode mixture layer on the inner layer side (outer layer side) of the region PL. For connection to a positive electrode lead, the positive electrode may have a region (current collector-exposed region) where the positive electrode mixture layer is not supported in the center of the winding direction (length direction). When a part on the inner layer side (outer layer side) of the region PL except the region P1 has a current collector-exposed region, the region S1L (S2L) is a region facing the positive electrode mixture layer, excluding the current collector-exposed region.

When the above configuration is satisfied, the local concentration of the stress generated by the Li deposition at the negative electrode on the innermost layer side of the positive electrode is suppressed, and the damage to the substrate due to the stress concentration is suppressed. As a result, the occurrence of an internal short circuit due to the damage to the substrate is suppressed.

In the wound electrode group, the expansion of the negative electrode has a great impact on the inner layer side, causing a step to be easily formed at the boundary with the expanded region. Therefore, at the winding-start end portion of the positive electrode, the separator is applied with a large load. Furthermore, near the protruding portion, Li deposits like coming around from the positive electrode mixture layer covered with the protruding portion. Therefore, the thickness of the deposited Li may increase locally in some cases. With these factors combined, the stress generated in association with expansion of the electrode group tends to increase locally in or near the area where the innermost layer portion of the positive electrode (esp., a winding-start end portion in the innermost layer portion) is overlapped with the protruding portion.

In this respect, in the present disclosure, the first protruding portion (second protruding portion) is disposed such that the X1 (Y1) will not be the largest among X1 to Xn (Y1 to Yn). This can suppress the above stress from increasing locally.

From the viewpoint of suppressing the damage to the substrate due to the above-mentioned stress concentration, it is preferable to dispose the first protruding portion (second protruding portion) such that the X1 (Y1) becomes as small as possible relative to X2 to Xn (Y2 to Yn). The X1 (Y1) is preferably smaller than the values of half or more of the X2 to Xn (Y2 to Yn). It is particularly preferable that the X1 (Y1) is smaller than all of the X2 to Xn (Y2 to Yn), i.e., smaller than the minimum value among the X2 to Xn (Y2 to Yn).

From the viewpoint of suppressing the damage to the substrate due to the above-mentioned stress concentration, the X1 (Y1) may be 0.5 or less, may be 0.35 or less, may be 0.2 or less, and may be even 0. The separator includes a spacer. Therefore, when the X1 (Y1) is 0, the X1 (Y1) cannot be the maximum value among the X1 to Xn. If the X1 is the largest among the X1 to Xn, even though the X1 (Y1) is 0.5 or less, the above-mentioned stress concentration may occur, to damage the substrate in some cases. When the X1 (Y1) is 0, the first protruding portion (second protruding portion) is not disposed on the first substrate (second substrate) facing the inner layer side (outer layer side) of the region P1. Even in this case, since the region P1 is much smaller than the regions P2 to Pn, the expansion of the electrode group due to the Li deposition can be sufficiently suppressed by disposing the first spacer (second spacer).

From the viewpoint of forming a space between the regions P2 to Pn and the negative electrode, and also between the region P1 and the negative electrode, and suppressing the expansion of the electrode group due to the Li deposition, the X1 (Y1) may be 0.01 or more, may be 0.025 or more, and may be or 0.05 or more. The range of the X1 (Y1) may be, for example, 0 or more and 0.5 or less, may be 0.01 or more and 0.5 or less, may be 0.01 or more and 0.4 or less, may be 0.01 or more (or 0.025 or more) and 0.35 or less, and may be 0.05 or more and 0.2 or less.

From the viewpoint of stably forming a space for the deposited Li, the X2 to Xn (Y2 to Yn) may be 0.02 or more, and may be 0.05 or more. From the viewpoint of securing the space for the deposited Li, the X2 to Xn (Y2 to Yn) may be 0.6 or less, may be 0.45 or less, and may be 0.25 or less. The range of the X2 to Xn (Y2 to Yn) may be, for example, 0.02 or more and 0.6 or less, may be 0.05 or more and 0.45 or less, and may be 0.08 or more and 0.25 or less.

Of the innermost layer portion of the positive electrode, the stress tends to concentrate especially at or near the winding-start end portion of the positive electrode (positive electrode mixture layer). Therefore, the first protruding portion (second protruding portion) is preferably disposed, with the ratio of overlapping with the winding-start end portion of the positive electrode (positive electrode mixture layer) set to be small, and more preferably disposed so as not to overlap the winding-start end portion of the positive electrode (positive electrode mixture layer).

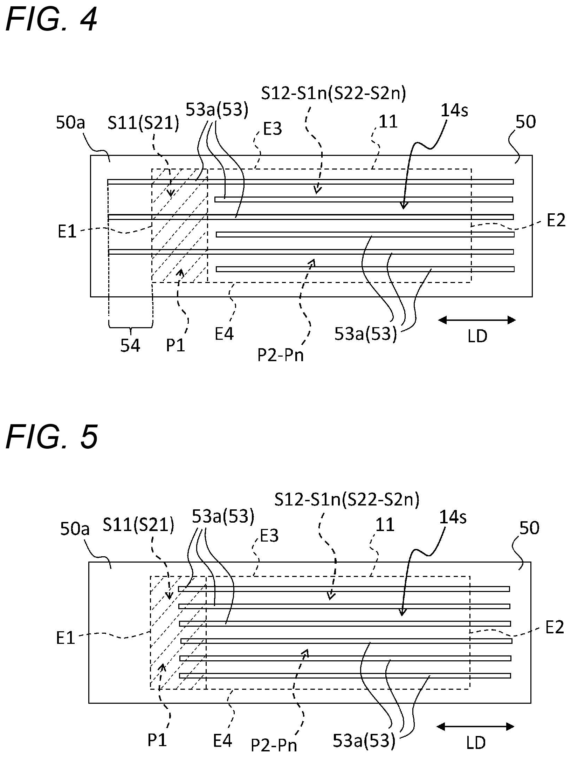

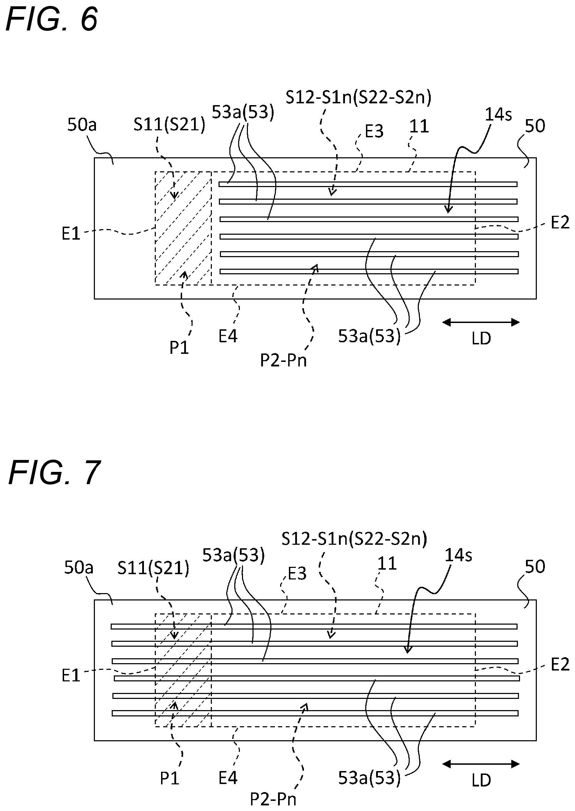

The first protruding portion (second protruding portion) is preferably not disposed further inward than the winding-start end portion of the positive electrode (e.g., in FIGS. 5 and 6, in a region more to the left side than the side corresponding to an end portion E1). In this case, the sliding of the winding-start end portion of the positive electrode will not be disturbed by the protruding portion, and the stress generated in association with expansion toward the inner layer side of the electrode group can be relaxed by the sliding of the winding-start end portion of the positive electrode. In this case, it is easy to dispose the first protruding portion (second protruding portion) such that the first protruding portion (second protruding portion) will not overlap the winding-start end portion of the positive electrode. When the spacer is in a stripe pattern, it is easy to dispose the first protruding portion (second protruding portion) such that the linear-shaped first protruding portion (second protruding portion) will not intersect the side corresponding to the winding-start end portion E1 of the positive electrode.

### (Separator)

The separator includes a sheet-like substrate, and a spacer disposed on a principal surface of the substrate.

### (Substrate)

For the substrate, a porous sheet having ion permeability and electrically insulating properties is used. Examples of the porous sheet include a microporous thin film, woven fabrics, and nonwoven fabrics. The material of the porous sheet is not particularly limited, and may be a polymer material. Examples of the polymer material include an olefin resin, a polyamide resin, and cellulose. Examples of the olefin resin include polyethylene, polypropylene, and an ethylene-propylene copolymer. The substrate may contain an additive, as necessary. Examples of the additive include an inorganic filler.

The thickness of the substrate is, although not particularly limited to, for example, 5 µm or more and 20 µm or less, more preferably 10 µm or more and 20 µm or less.

The substrate may include a porous sheet, and a composite material layer (heat-resistant layer). The composite material layer may be formed on one principal surface or on both principal surfaces of the porous sheet. The composite material layer is a layer that is permeable to lithium ions. The composite material layer contains inorganic particles. The composite material layer may contain a resin material as necessary. The thickness of the composite material layer may be 5% to 50% of the overall thickness of the substrate.

The composite material layer may be disposed on the side facing the positive electrode of the porous sheet, and may be on the side facing the negative electrode of the porous sheet. When the composite material layer is disposed on the side facing the positive electrode, the deterioration of the porous sheet due to oxidation reaction can be suppressed. When the composite material layer is disposed on the side facing the negative electrode, the deterioration of the porous sheet due to reduction reaction can be suppressed. A spacer may be disposed on the composite material layer. In this case, the effect of suppressing the thermal shrinkage of the substrate is especially enhanced.

The inorganic particles are preferably particles of an inorganic compound having thermal stability and electrically insulating properties, which is unlikely to melt or decompose during abnormal heat generation due to a short circuit of the battery or other causes. The material of the inorganic particles includes, for example, an oxide, a hydroxide, a nitride, a carbide, and a sulfide. Examples of the oxide include aluminum oxide, boehmite, magnesium oxide, titanium oxide, zirconium oxide, silicon oxide, yttrium oxide, and zinc oxide. Examples of the nitride include silicon nitride, aluminum nitride, boron nitride, and titanium nitride. Examples of the carbide include silicon carbide, and boron carbide. Examples of the sulfide include barium sulfate. Examples of the hydroxide include aluminum hydroxide. The median diameter in a volume-based particle size distribution of the inorganic particles may be 0.2 to 2.0 µm.

The median diameter in a volume-based particle size distribution of the inorganic particles can be measured, for example, with a laser diffraction-scattering type particle size distribution analyzer (e.g., Microtrac manufactured by Nikkiso Co., Ltd.). Alternatively, a cross section of the substrate layer may be observed with a transmission electron microscope (TEM), to obtain a TEM image, and, with respect to randomly selected 100 inorganic particles, calculate an area surrounded by the contour of each particle, and calculate a diameter of an equivalent circle (perfect circle) having the same area as the calculated area, to determine the median diameter as an average value of the diameters of the 100 equivalent circles.

Examples of the resin material contained in the composite material layer (heat-resistant layer) include: fluorine-containing resin, such as polyvinylidene fluoride (PVdF) and polytetrafluoroethylene; fluorine-containing rubber, such as vinylidene fluoride-tetrafluoroethylene copolymer and ethylene-tetrafluoroethylene copolymer; rubbers, such as styrene-butadiene copolymer or hydrogenated product thereof, acrylonitrile-butadiene copolymer or hydrogenated product thereof, methacrylic acid ester-acrylic acid ester copolymer, styrene-acrylic acid ester copolymer, acrylonitrile-acrylic acid ester copolymer, ethylene propylene rubber, polyvinyl alcohol, and polyvinyl acetate; cellulose derivatives, such as ethyl cellulose, methyl cellulose, hydroxyethyl cellulose, and carboxymethyl cellulose; acrylic resin, such as acrylic acid-methacrylic acid copolymer; polyphenylene ether; polysulfone; polyether sulfone; polyphenylene sulfide; polyetherimide; polyimide; polyamide, such as fully aromatic polyamide (aramid); polyamide imide; polyacrylonitrile; polyvinyl alcohol; polyether; polyacrylic acid; polymethacrylic acid; polyester; polyolefin; silicone resin; urethane resin; melamine resin; urea resin; and epoxy resin.

The resin material contained in the composite material layer (heat-resistant layer) is preferably a polymer material having higher heat resistance than the material of the porous sheet. Such a polymer material preferably includes at least one selected from the group consisting of an aromatic polyamide, an aromatic polyimide, and an aromatic polyamide imide. These are known as polymers having high heat resistance. From the viewpoint of the heat resistance, aramids, i.e., meta-aramids (meta-type wholly-aromatic polyamides) and para-aramids (para-type wholly-aromatic polyamides), are preferred.

The content ratio of the inorganic particles in the composite material layer may be in the range of 50 mass% to 99 mass% (e.g., in the range of 85 mass% to 99 mass%).

The composite material layer is formed by, for example, applying an application liquid containing inorganic particles, a resin material, and a liquid component (dispersion medium), onto a porous sheet, and drying the applied film. Examples of the liquid component include N-methyl-2-pyrrolidone.

### (Spacer)

The spacer is formed on a principal surface of the substrate. From the viewpoints of the ease of forming of an electrode group and others, it is preferable that the substrate and the spacer are integrated. The spacers may be provided on a principal surface facing the positive electrode of the substrate (a principal surface on the positive electrode side of the substrate), may be formed on a principal surface facing the negative electrode of the substrate (a principal surface on the negative electrode side of the substrate), or on both principal surfaces. When the spacer is provided on the principal surface facing the positive electrode of the substrate, as compared to when the spacer is provided on the principal surface facing the negative electrode of the substrate, the Li can deposit between the spacers so as to extend the substrate toward the positive electrode. Therefore, a compressive stress is generated in the deposited Li, and Li is likely to deposit densely. From the viewpoint of improving the discharge efficiency and the cycle characteristics, the spacer is preferably provided on the principal surface facing the positive electrode of the substrate. On the other hand, when the spacer is provided on the principal surface facing the negative electrode of the substrate, a space is formed in advance between the substrate and the negative electrode, and therefore, the tensile load on the substrate that occurs following the deposition of Li is reduced. In short, it is advantageous in maintaining the insulating properties of the substrate, or maintaining the short-circuit resistance of the substrate.

In a lithium secondary battery, the major role of the spacer is to form a space for allowing lithium metal to deposit therein. The lithium metal will be accommodated in the space secured by the spacer, which can suppress the expansion of the negative electrode during charging.

The spacer may contain a resin material (e.g., an insulating resin), and may contain a resin material and particles. The proportion of the resin material in the spacer may be 10 vol% or more, 30 vol% or more, or 50 vol% or more, and may be 100 vol% or less, or 80 vol% or less.

Examples of the resin material contained in the spacer include: fluorine-containing resin, such as polyvinylidene fluoride (PVdF) and polytetrafluoroethylene; fluorine-containing rubber, such as vinylidene fluoride-tetrafluoroethylene copolymer and ethylene-tetrafluoroethylene copolymer; rubbers, such as styrene-butadiene copolymer or hydrogenated product thereof, acrylonitrile-butadiene copolymer or hydrogenated product thereof, methacrylic acid ester-acrylic acid ester copolymer, styrene-acrylic acid ester copolymer, acrylonitrile-acrylic acid ester copolymer, ethylene propylene rubber, polyvinyl alcohol, and polyvinyl acetate; cellulose derivatives, such as ethyl cellulose, methyl cellulose, hydroxyethyl cellulose, and carboxymethyl cellulose; acrylic resin, such as acrylic acid-methacrylic acid copolymer; polyphenylene ether; polysulfone; polyether sulfone; polyphenylene sulfide; polyetherimide; polyimide; polyamide, such as fully aromatic polyamide (aramid); polyamide imide; polyacrylonitrile; polyvinyl alcohol; polyether; polyacrylic acid; polymethacrylic acid; polyester; polyolefin; silicone resin; urethane resin; melamine resin; urea resin; and epoxy resin.

Among the above resin materials, as a material that is not permeable to lithium ions, polyimide, polyvinylidene fluoride, and acrylonitrile-acrylic acid ester copolymer, and the like are preferably used, and polyimide may be used. A non-porous spacer of a certain height or higher formed from any of these resin materials serves as a layer that is not permeable to lithium ions. From the viewpoint of suppressing the increase of the reaction speed of gas generation in the event of an internal short circuit, it is preferable to dispose such a spacer.

The particles may be inorganic particles, and may be organic particles. In particular, inorganic particles of a metal oxide, a metal hydroxide, a metal nitride, a metal carbide, a metal sulfide, and the like, with insulating properties can be used. Preferred examples of the metal oxide include aluminum oxide (alumina, boehmite), magnesium oxide, titanium oxide (titania), zirconium oxide, and silicon oxide (silica). Examples of the metal hydroxide include aluminum hydroxide. Examples of the metal nitride include silicon nitride, aluminum nitride, boron nitride, and titanium nitride. Examples of the metal carbide include silicon carbide and boron carbide. Examples of the metal sulfide include barium sulfate. Minerals, such as aluminosilicate, layered silicate, barium titanate, and strontium titanate, may also be used. In particular, alumina, silica, titania, and the like are preferably used.

The average particle diameter of the particles, although not particularly limited to, may be 0.1 µm or more or 0.5 µm or more, and may be 10 µm or less, 5 µm or less, or 2 µm or less. The average particle diameter can be measured in the following manner. First, a cross section of the spacer in the thickness direction of the separator is photographed with an electron microscope, to obtain an image of the cross section. Next, the image is subjected to image processing, such as binarization, to identify the particle portion. Next, the diameter (circle equivalent diameter) of a circle having the same area as the cross section area of each particle is obtained, to calculate an arithmetic average of the circle equivalent diameters, which can be determined as the average particle diameter. The arithmetic average can be obtained, for example, from 100 or more particles. The average particle diameter of other particles contained in the electrode plate and the separator can also be obtained in a similar manner.

When the spacer contains a resin material and particles, the content ratio of the particles in the spacer is preferably 50 vol% or less. This makes it easy to ensure sufficient strength of the spacer.

The spacer may include linear-shaped protruding portions and/or dot-shaped protruding portions. In one aspect, the linear-shaped protruding portions are ridge-shaped protruding portions. The linear-shaped protruding portions may be disposed intermittently or continuously. The linear-shaped protruding portions may be straight or curved.

The width of the linear-shaped protruding portions may be 100 µm or more, or 200 µm or more, and may be 2000 µm or less, or 1000 µm or less.

The spacer preferably has a predetermined repeating pattern. That is, it is preferable that the protruding portions are disposed in a predetermined pattern. The linear-shaped protruding portions may be disposed in a stripe pattern, and may be disposed in a mesh pattern. The mesh pattern may be an assembly of polygons. An example of the mesh pattern includes a shape in which polygons are combined so as to share sides. The polygon includes a triangle, a square, a hexagon, and the like. Different kinds of polygons may be combined. The mesh pattern may be a honeycomb pattern. The dot-shaped protruding portions may be disposed in a predetermined repeating pattern.

When the disposing pattern of the first spacer (second spacer) is a dot pattern, the above XL (YL) may be adjusted by changing the maximum diameter, the number (dot-to-dot distance), etc. of the protruding portions, according to the region S1L (S2L) of the first substrate (second substrate). When the disposing pattern of the first spacer (second spacer) is a stripe pattern, the above XL (YL) may be adjusted by changing the number (line-to-line distance), etc. of the linear-shaped first protruding portions (second protruding portions), according to the region S1L (S2L) of the first substrate (second substrate). When the first spacer (second spacer) (first protruding portions (second protruding portions)) is disposed intermittently (when missing portions are partially provided), the above XL (YL) may be adjusted by changing the number, the size (length), etc. of the missing portions, according to the region S1L (S2L) of the first substrate (second substrate).

A height H of the spacer (protruding portions) may be greater than a thickness T of the substrate. The ratio H/T of the height H to the thickness T may be more than 1, and may be 1.5 or more, 2 or more, or 3 or more. The H/T may be 10 or less, 8 or less, 5 or less, or 4 or less. By setting the H/T to 1.5 or more, the expansion of the electrode group can be particularly suppressed.

The height H can be measured in the following manner. First, a cross section of the separator (substrate) in its thickness direction is photographed with an electron microscope, to obtain an image of the cross section. Next, on the image, any 20 points in the spacer are selected, to measure a height of the spacer at each of these points. Next, the heights measured at the 20 points are arithmetically averaged, and the obtained average value is determined as the height H. The thickness T can be measured in a similar manner.

The spacer is formed by, for example, applying an application liquid containing a component of the spacer and a liquid component, onto the substrate at predetermined places, and drying the applied films. Examples of the liquid component include N-methyl-2-pyrrolidone. The application may be performed using a dispenser and the like, or using a known printing method, such as gravure printing, inkjet printing, and screen printing. The drying may be performed by a known method, such as drying by heating and natural drying.

### (Negative electrode)

The negative electrode includes a negative electrode current collector. In a lithium secondary battery, lithium metal deposits on a surface of the negative electrode during charging. Specifically, lithium ions contained in the nonaqueous electrolyte receive electrons on the negative electrode during charging, to be lithium metal, which deposits on the surface of the negative electrode. The lithium metal deposited on the surface of the negative electrode dissolves in the form of lithium ions in the nonaqueous electrolyte during discharging.

The negative electrode may include a lithium ion storage layer (a layer that exhibits capacity through absorption and release of lithium ions into and from the negative electrode active material (graphite, etc.)) supported on the negative electrode current collector. In this case, the open circuit potential of the negative electrode at full charge may be 70 mV or less relative to lithium metal (lithium dissolution/deposition potential). When the open circuit potential of the negative electrode at full charge is 70 mV or less relative to lithium metal, lithium metal is present on the surface of the lithium ion storage layer at full charge. That is, the negative electrode exhibits capacity through deposition and dissolution of lithium metal.

Here, "at full charge" refers to a state in which the battery is charged to, for example, a charged state of 0.98×C or more, where C is the rated capacity of the battery. The open-circuit potential of the negative electrode at full charge can be measured by disassembling a fully charged battery in an argon atmosphere, to take out the negative electrode, and assembling a cell using lithium metal as a counter electrode. The nonaqueous electrolyte of the cell may be of the same composition as that in the disassembled battery.

The lithium ion storage layer is a layer of a negative electrode mixture containing a negative electrode active material. The negative electrode mixture may contain, in addition to the negative electrode active material, a binder, a thickener, a conductive agent, and the like.

Examples of the negative electrode active material include a carbonaceous material, a Si-containing material, and a Sn-containing material. The negative electrode may contain the negative electrode active material singly or in combination of two or more kinds. As the carbonaceous material, for example, graphite, graphitizable carbon (soft carbon), nongraphitizable carbon (hard carbon), and the like can be used.

The conductive material is, for example, a carbon material. Examples of the carbon material include carbon black, acetylene black, Ketjen black, carbon nanotubes, and graphite.

The binder includes, for example, a fluorocarbon resin, polyacrylonitrile, a polyimide resin, an acrylic resin, a polyolefin resin, a rubbery polymer, and the like. Examples of the fluorocarbon resin include polytetrafluoroethylene and polyvinylidene fluoride.

The negative electrode current collector may be a conductive sheet. As the conductive sheet, a foil, a film, and like are used.

The material of the negative electrode current collector (conductive sheet) may be any conductive material, except lithium metal and lithium alloy. The conductive material may be a metal material, such as metal and alloy. The conductive material is preferably a material that does not react with lithium. Specifically, a material that forms neither an alloy nor an intermetallic compound with lithium is preferred. Such a conductive material is exemplified by copper (Cu), nickel (Ni), iron (Fe), and an alloy of one or more of these metal elements, and graphite having a basal plane predominately exposed on its surface. Examples of the alloy include copper alloy and stainless steel (SUS). In particular, copper and/or copper alloy that have high electrical conductivity are preferred.

The thickness of the negative electrode current collector is not particularly limited, and is, for example, 5 µm or more and 300 µm or less.

### (Positive electrode)

The positive electrode includes, for example, a positive electrode current collector, and a positive electrode mixture layer supported by the positive electrode current collector. The positive electrode mixture layer contains, for example, a positive electrode active material, a conductive material, and a binder. The positive electrode mixture layer may be formed on only one surface or on both surfaces of the positive electrode current collector. The positive electrode can be obtained by, for example, applying a positive electrode mixture slurry containing a positive electrode active material, a conductive material, and a binder, onto both surfaces of the positive electrode current collector, and drying the applied films, followed by rolling.

The positive electrode active material is a material that absorbs and releases lithium ions. Examples of the positive electrode active material include a lithium-containing transition metal oxide, a transition metal fluoride, a polyanion, a fluorinated polyanion, and a transition metal sulfide. In particular, a lithium-containing transition metal oxide is preferred because of its inexpensive manufacturing cost and high average discharge voltage.

The lithium contained in the lithium-containing transition metal oxide is released in the form of lithium ions from the positive electrode during charging, and deposits in the form of lithium metal on the negative electrode or on the negative electrode current collector. During discharging, the lithium metal dissolves from the negative electrode to release lithium ions, which are then absorbed into the composite oxide of the positive electrode. That is, the lithium ions involved in charging and discharging are mostly derived from the solute in the nonaqueous electrolyte and the positive electrode active material.

Examples of the transition metal element contained in the lithium-containing transition metal oxide include Sc, Ti, V, Cr, Mn, Fe, Co, Ni, Cu, Y, Zr, and W. The lithium-containing transition metal oxide may contain these transition metal elements singly or in combination of two or more kinds. The transition metal element may be Ni, Co, and/or Mn. The lithium-containing transition metal oxide can contain one or more kinds of typical elements, as necessary. Examples of the typical element include Mg, Al, Ca, Zn, Ga, Ge, Sn, Sb, Pb, and Bi. The typical element may be Al, and the like.

Among the lithium-containing transition metal oxides, a composite oxide containing Ni, Co, and/or Mn as transition metal elements and optionally containing Al, and having a layered rock-salt type crystal structure is preferred in terms of achieving high capacity. In this case, in the lithium secondary battery, a molar ratio mLi/mM of a total amount mLi of the lithium that the positive electrode and the negative electrode have, to an amount mM of the metal M other than lithium that the positive electrode has, is set to, for example, 1.1 or less.

As the binder, the conductive agent, and the like, for example, those exemplified for the negative electrode can be used. The shape and the thickness of the positive electrode current collector can be selected from the shape and the range of the positive electrode current collector.

Examples of the material of the positive electrode current collector (conductive sheet) include a metal material containing Al, Ti, Fe, or the like. The metal material may be Al, Al alloy, Ti, Ti alloy, Fe alloy, and the like. The Fe alloy may be stainless steel (SUS).

The thickness of the positive electrode current collector is, although not particularly limited to, for example, 5 µm or more and 300 µm or less.

### (Nonaqueous electrolyte)

The nonaqueous electrolyte having lithium ion conductivity may be a liquid electrolyte (electrolyte solution), may be a gel electrolyte, and may be a solid electrolyte. The liquid electrolyte is, for example, an electrolyte solution containing a nonaqueous solvent, and a lithium salt dissolved in the nonaqueous solvent. The concentration of the lithium salt in the electrolyte solution is, for example, 0.5 mol/L or more and 2 mol/L or less. The electrolyte solution may contain a known additive.

The gel electrolyte contains a lithium salt and a matrix polymer, or contains a lithium salt, a nonaqueous solvent, and a matrix polymer. As the matrix polymer, for example, a polymer material that absorbs a nonaqueous solvent and turns into a gel is used. Examples of the polymer material include a fluorocarbon resin, an acrylic resin, a polyether resin, and polyethylene oxide.

As the solid electrolyte, for example, a known material for use in all-solid lithiumion secondary batteries and the like (e.g., oxide-based solid electrolyte, sulfide-based solid electrolyte, halide-based solid electrolyte) is used.

The liquid nonaqueous electrolyte is prepared by dissolving a lithium salt in a nonaqueous solvent. When the lithium salt dissolves in the nonaqueous solvent, lithium ions and anions are produced.

As the anions, BF₄⁻, ClO₄⁻, PF₆⁻, CF₃SO₃⁻, CF₃CO₂⁻, imide anions, an oxalate complex anion, and the like can be used. Examples of the imide anions include N(SO₂CF₃)₂⁻, and N(CₘF₂ₘ₊₁SO₂)ₓ(CₙF₂ₙ₊₁SO₂)_{y}⁻, where m and n are each independently an integer of 0 or 1 or more, x and y are each independently 0, 1, or 2, and satisfy x+y = 2. The oxalate complex anion may contain boron and/or phosphorus. Examples of the oxalate complex anion include bis(oxalate)borate anion, difluoro(oxalate)borate anion (BF₂(C₂O₄)⁻), PF₄(C₂O₄)⁻, and PF₂(C₂O₄)₂⁻. The nonaqueous electrolyte may contain these anions singly or in combination of two or more kinds.

From the viewpoint of suppressing the dendritic deposition of lithium metal, the nonaqueous electrolyte preferably contains at least an oxalate complex anion, and in particular, it is desirable to contain an oxalate complex anion having fluorine. The oxalate complex anion having fluorine interacts with lithium, which allows lithium metal to easily deposit uniformly in the form of fine particles. Therefore, local deposition of lithium metal can be easily suppressed. The oxalate complex anion having fluorine may be combined with another anion. The other anion may be PF₆⁻ and/or imide anions.

The nonaqueous solvent may be, for example, an ester, an ether, a nitrile, an amide, or halogen-substituted derivatives thereof. The nonaqueous electrolyte may include these nonaqueous solvents singly or in combination of two or more kinds. Examples of the halogen-substituted derivatives include a fluoride.

As the ester, for example, a carbonic acid ester, a carboxylic acid ester, and the like are exemplified. Examples of a cyclic carbonic acid ester include ethylene carbonate, propylene carbonate, and fluoroethylene carbonate (FEC). Examples of a chain carbonic acid ester include dimethyl carbonate (DMC), ethyl methyl carbonate (EMC), and diethyl carbonate. Examples of a cyclic carboxylic acid ester include γ-butyrolactone, and γ-valerolactone. Examples of a chain carboxylic acid ester include ethyl acetate, methyl propionate, and methyl fluoropropionate.

As the ether, a cyclic ether and a chain ether are exemplified. Examples of the cyclic ether include 1,3-dioxolane, 4-methyl-1,3-dioxolane, tetrahydrofuran, and 2-methyltetrahydrofuran. Examples of the chain ether include 1,2-dimethoxyethane, diethyl ether, ethyl vinyl ether, methyl phenyl ether, benzyl ethyl ether, diphenyl ether, dibenzyl ether, 1,2-diethoxyethane, and diethylene glycol dimethyl ether.

The concentration of the lithium salt in the nonaqueous electrolyte is, for example, 0.5 mol/L or more and 3.5 mol/L or less. The concentration of the anions in the nonaqueous electrolyte may be set to 0.5 mol/L or more and 3.5 mol/L or less. The concentration of the oxalate complex anion in the nonaqueous electrolyte may be set to 0.05 mol/L or more and 1 mol/L or less.

The nonaqueous electrolyte may contain an additive. The additive may form a coating film on the negative electrode. When a coating film derived from the additive is formed on the negative electrode, the dendrite formation and growth can be easily suppressed. Examples of such an additive include vinylene carbonate, FEC, and vinyl ethyl carbonate (VEC).

A description will be given below of one example of a lithium secondary battery according to the present embodiment, with reference to the drawings. To the components of the below-described example of the secondary battery, the components as described above can be applied. The components of the below-described example of the secondary battery can be modified based on the description above. The matters as described below may be applied to the above embodiments. In the below-described lithium secondary battery, the components which are not essential to the lithium secondary battery according to the present disclosure may be omitted. In the drawings referred to below, the scale of the components is changed to facilitate understanding.

### (Embodiment 1)

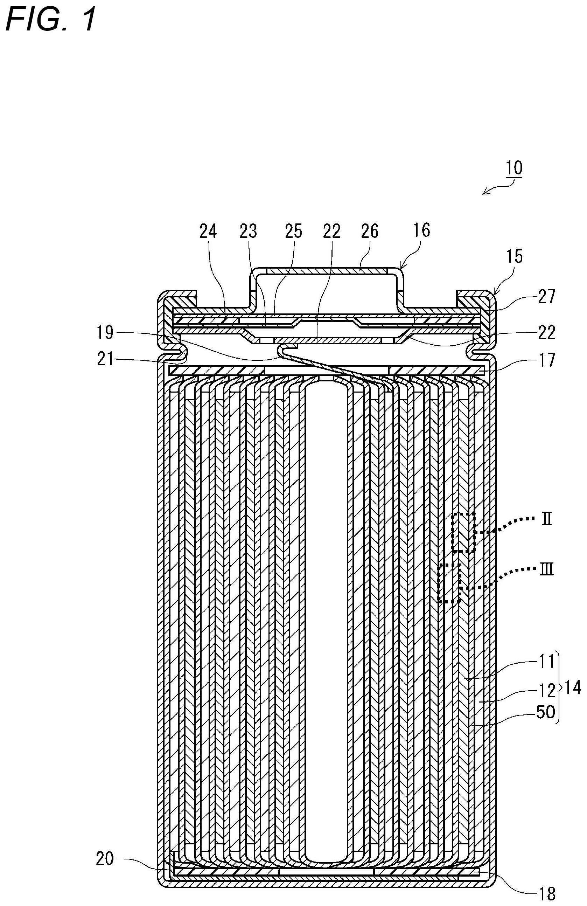

FIG. 1 is a schematic longitudinal sectional view of an example of a lithium secondary battery according to Embodiment 1. In FIG. 1, the spacer and the space formed by the spacer are not shown. A cylindrical lithium secondary battery 10 as illustrated in FIG. 1 includes a cylindrical battery case, and a wound electrode group 14 and a nonaqueous electrolyte (not shown) housed in the battery case. The battery case includes a case main body 15, which is a metal container having a bottomed cylindrical shape, and a sealing body 16 sealing the opening of the case main body 15. A gasket 27 is disposed between the case main body 15 and the sealing body 16. The gasket 27 ensures the hermeticity of the battery case. In the case main body 15, insulating plates 17 and 18 are respectively disposed at both ends of the electrode group 14 in the winding axis direction.

The case main body 15 has a step portion 21 formed by, for example, partially pressing the sidewall of the case main body 15 from the outside. The step portion 21 may be formed, on the sidewall of the case main body 15, in an annular shape along the circumferential direction of the case main body 15. In this case, the sealing body 16 is supported on the surface of the step portion 21 on the opening side.

The sealing body 16 includes a filter 22, a lower valve body 23, an electrically insulating member 24, an upper valve body 25, and a cap 26. In the sealing body 16, these members are stacked in this order. The sealing body 16 is attached at the opening of the case main body 15 such that the cap 26 is positioned outside the case main body 15, and the filter 22 is positioned inside the case main body 15. Each of the above members constituting the sealing body 16 is, for example, disc-shaped or ring-shaped. The lower valve body 23 and the upper valve body 25 are connected to each other at their respective central portions, and an insulating member 24 is interposed between the respective peripheral portions. The filter 22 and the lower valve body 23 are connected to each other at their respective central portions. The upper valve body 25 and the cap 26 are connected to each other at their respective central portions. In other words, the members except the insulating member 24 are electrically connected to each other.

The lower valve body 23 has a vent hole (not shown). Therefore, when the internal pressure of the battery case rises due to an abnormal heat generation or other causes, the upper valve body 25 bulges toward the cap 26 and spaced away from the lower valve body 23. This cuts off the electrical connection between the lower valve body 23 and the upper valve body 25. When the internal pressure further rises, the upper valve body 25 ruptures, to let the gas escape though an aperture (not shown) formed in the cap 26.

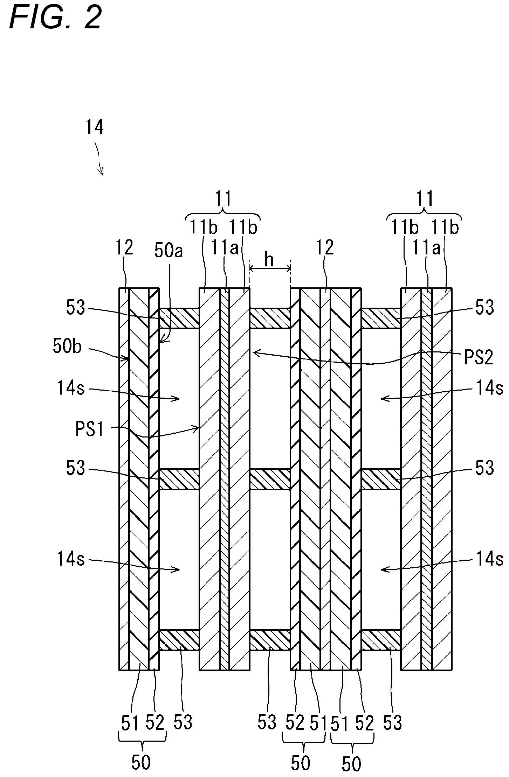

FIG. 2 is a partially enlarged view of the electrode group 14. FIG. 2 includes a portion in the vicinity of the positive electrode surrounded by a region II in FIG. 1 and a portion in the vicinity of the negative electrode surrounded by a region III in FIG. 1.

The electrode group 14 includes a positive electrode 11, a negative electrode 12, and a separator (a substrate 50 and a spacer 53). The positive electrode 11, the negative electrode 12, and the substrate 50 of the separator are all belt-shaped. The electrode group 14 is formed by winding the positive electrode 11, the negative electrode 12, and the separator (substrate 50), with the separator disposed between the positive electrode 11 and the negative electrode 12.

The positive electrode 11 includes a positive electrode current collector 11a, and a positive electrode mixture layer 11b. The positive electrode current collector 11a is electrically connected, via a positive electrode lead 19, to the cap 26 that functions as a positive electrode terminal. In FIG. 2, as the negative electrode 12, a negative electrode (negative electrode current collector) without lithium metal deposited thereon is shown. The negative electrode 12 is electrically connected, via a negative electrode lead 20, to the case main body 15 that functions as a negative electrode terminal.

The substrate 50 has a principal surface 50a facing the positive electrode 11, and a principal surface 50b facing the negative electrode 12. The substrate 50 of Embodiment 1 includes a porous sheet 51 and a composite material layer 52 (heat-resistant layer). The composite material layer 52 is formed, of two principal surfaces of the porous sheet 51, on the principal surface facing the negative electrode 12. In Embodiment 1, the spacer 53 is formed on the principal surface 50a facing the positive electrode 11. The spacer 53 is formed on the composite material layer 52 and is in contact with the positive electrode 11. By the spacer 53, a space 14s is formed between the positive electrode 11 and the negative electrode 12 (between the negative electrode 12 and the substrate 50). In FIG. 2, the height h of the spacer 53 is shown.

In FIG. 2, the spacer 53 is disposed on the principal surface 50a facing the positive electrode 11 of the substrate 50, which however may be disposed on the principal surface 50b facing the negative electrode 12 of the substrate 50. The spacer 53 is formed on the composite material layer 52, which however may be formed on the porous sheet 51. The composite material layer 52 of the substrate 50 is disposed so as to face the positive electrode 11, which however may be disposed so as to face the negative electrode 12.

In the lithium secondary battery 10, lithium metal deposits on the negative electrode 12 during charging. Since the space 14s is present between the positive electrode 11 and the negative electrode 12, the volume change of the electrode group 14 associated with the deposition of lithium metal can be reduced, leading to improved cycle characteristics.

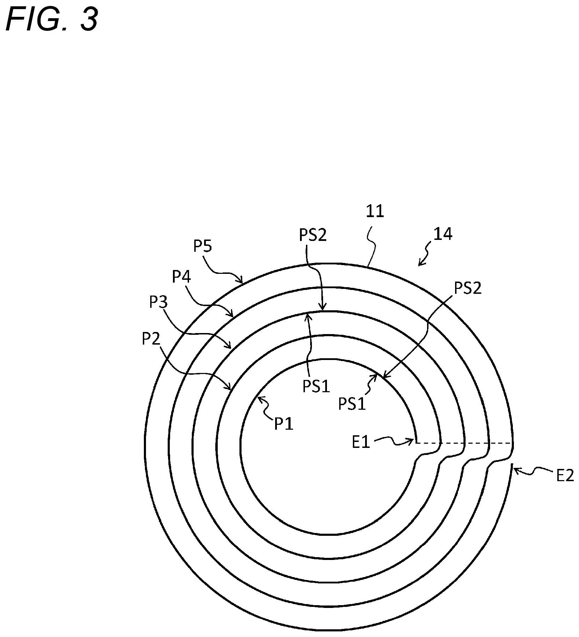

FIG. 3 is a schematic top view of an example of the positive electrode in the electrode group as viewed in the winding axis direction. FIG. 3 illustrates a state in which the positive electrode is wound within the electrode group. The negative electrode and separator are not shown in FIG. 3.

The belt-shaped positive electrode 11 has a winding-start end portion E1 and a winding-finish end portion E2. The positive electrode 11 has a region PL (P1 to Pn) at the Lth layer (L = 1 to n) from the winding-start end portion E1 of the positive electrode 11. In FIG. 3, n = 5, and the positive electrode 11 has regions P1 to P5 at the first to fifth layers. The positive electrode 11 has a principal surface PS1 (PS2) on the inner layer side (outer layer side). In FIG. 3, n = 5. The value of n, however, is not limited thereto. In FIG. 3, the region P5 located at the outermost layer of the positive electrode corresponds to one round of the outermost layer of the positive electrode. The region Pn, however, may be smaller than one round of the outermost layer of the positive electrode.

FIGS. 4 to 6 show examples of the planar shape of the spacer 53. In a plan view, a spacer 53 (linear-shaped protruding portions 53a) is disposed on one principal surface of the substrate 50. In each figure, the positive electrode 11 facing the substrate 50 is shown by a dashed line. The substrate 50 with the spacer 53 (protruding portions 53a) disposed thereon is disposed on both the inner layer side and the outer layer side of the positive electrode 11. The substrate 50 with the spacer 53 (protruding portions 53a) disposed thereon is disposed on the inner layer side (the principal surface PS1 side) and on the outer layer side (the principal surface PS2 side) of the positive electrode 11. Note that the figures are schematic, and the width-to-length ratio of each element, the area ratio of the members, etc. do not necessarily reflect the actual values.

The spacers 53 in FIGS. 4 to 6 include a plurality of linear-shaped protruding portions 53a disposed in a stripe pattern. The plurality of linear-shaped protruding portions 53a are disposed parallel to and spaced apart from each other along the length direction (LD direction) of the belt-shaped substrate 50. The regions where the spacers 53 are not formed constitute the space 14s. Although six linear-shaped protruding portions 53a are disposed in FIGS. 4 to 6, the number of the linear-shaped protruding portions 53a is not limited thereto. The linear-shaped protruding portions 53a are disposed continuously, which however may be disposed intermittently.

The substrate 50 has a region S1L (S2L) (L = 1 to n) facing the inner layer side (outer layer side) of the region PL of the positive electrode 11. A ratio ALt/AL (BLt/BL) of an area ALt (BLt) of portions overlapping the protruding portions 53a in the region S1L (S2L) to an area AL (BL) of the region S1L (S2L) is denoted by XL (YL). The values of the XL and the YL corresponding to the regions P1 to Pn where L = 1 to n (n is an integer of 3 or more) are respectively represented by X1 to Xn (Y1 to Yn). At this time, the X1 (Y1) is smaller than any of the X2 to Xn (Y2 to Yn). In FIGS. 4 and 5, the X1 (Y1) is 1/2 of the X2 to Xn (Y2 to Yn). In FIG. 6, the X1 (Y1) is 0. In FIG. 4, the lengths of some of the linear-shaped protruding portions are adjusted on the region P1 side. In FIGS. 5 and 6, the lengths of all of the linear-shaped protruding portions are adjusted on the region P1 side.

The spacers as illustrated in FIGS. 5 and 6 are preferred in the points that none of the linear-shaped protruding portions 53a are disposed further inward than the winding-start end portion E1 of the positive electrode 11 and are disposed so as not to overlap the winding-start end portion E1 of the positive electrode 11.

Some of the linear-shaped protruding portions 53a constituting the spacer 53 in a stripe pattern in FIG. 4 have a portion 54 which is further inward than the winding-start end portion E1 of the positive electrode 11. The portion 54 is a portion extending from the end portion E1 of the positive electrode 11. The linear-shaped protruding portion 53a having the portion 54 intersects the side corresponding to the end portion E1 and has a portion overlapping the end portion E1, in which the stress due to the Li deposition tends to increase at or near the overlapping portion. On the other hand, in the spacer 53 in a stipe pattern shown in FIGS. 5 and 6, none of the linear-shaped protruding portions 53a has the above portion 54, so that the stress concentration at the region P1 of the positive electrode 11 can be further suppressed.

From the viewpoint of forming a space in the region P1, the spacer 53 as illustrated in FIG. 5 is more preferable, in which the protruding portions 53a are disposed in a part of the region S1 facing the region P1 of the substrate 50.

In Embodiment 1, a cylindrical lithium secondary battery including a wound electrode group is described. However, the lithium secondary battery of the present embodiment is not limited to the form of Embodiment 1, and is applicable also to other forms. The shape of the lithium secondary battery can be selected as appropriate from various shapes, such as cylindrical, coin, prismatic, sheet-like, and flat shapes, depending on its intended use and the like.

### (Supplementary notes)

The above description of embodiments discloses the following techniques.

### (Technique 1)

A lithium secondary battery, comprising:
an electrode group including a positive electrode, a negative electrode, and a separator disposed between the positive electrode and the negative electrode, which are wound together; and a nonaqueous electrolyte, wherein
at the negative electrode, lithium metal deposits during charging, and the lithium metal dissolves during discharging,
the separator includes a first separator disposed on an inner layer side of the positive electrode and a second separator disposed on an outer layer side of the positive electrode,
the first separator includes a sheet-like first substrate, and a first spacer disposed on a principal surface of the first substrate, the first spacer including a first protruding portion,
the second separator includes a sheet-like second substrate, and a second spacer disposed on a principal surface of the second substrate, the second spacer including a second protruding portion,
the positive electrode has a region PL at an Lth layer from a winding-start end portion of the positive electrode, and
when a ratio ALt/AL of an area ALt of a portion overlapping the first protruding portion in a region S1L in the first substrate facing an inner layer side of the region PL, to an area AL of the region S1L is denoted by XL,
a ratio BLt/BL of an area BLt of a portion overlapping the second protruding portion in a region S2L in the second substrate facing an outer layer side of the region PL, to an area BL of the region S2L is denoted by YL, and
values of the XL and the YL corresponding to the regions P1 to Pn where L = 1 to n (n is an integer of 3 or more) are represented by X1 to Xn and Y1 to Yn, respectively,
the X1 is smaller than at least one of the X2 to Xn, and
the Y1 is smaller than at least one of the Y2 to Xn.

### (Technique 2)

The lithium secondary battery according to technique 1, wherein
the X1 is smaller than any of the X2 to Xn, and
the Y1 is smaller than any of the Y2 to Yn.

### (Technique 3)

The lithium secondary battery according to technique 1 or 2, wherein
the X1 is 0 or more and 0.5 or less, and
the Y1 is 0 or more and 0.5 or less.

### (Technique 4)

The lithium secondary battery according to any one of techniques 1 to 3, wherein the first protruding portion and the second protruding portion are both disposed so as not to overlap a winding-start end portion of the positive electrode.

### (Technique 5)

The lithium secondary battery according to any one of techniques 1 to 4, wherein neither the first protruding portion nor the second protruding portion are disposed further inward than the winding-start end portion of the positive electrode.

### (Technique 6)

The lithium secondary battery according to any one of techniques 1 to 5, wherein the first spacer and the second spacer are disposed on a principal surface facing the positive electrode of the first substrate and a principal surface facing the positive electrode of the second substrate, respectively.

### (Technique 7)

The lithium secondary battery according to any one of techniques 1 to 6, wherein the first spacer and the second spacer include the first protruding portion disposed in a predetermined repeating pattern and the second protruding portion disposed in a predetermined repeating pattern, respectively.

### (Technique 8)

The lithium secondary battery according to any one of techniques 1 to 7, wherein a plurality of the first protruding portions which are linear shaped and a plurality of the second protruding portions which are linear shaped are disposed in parallel to and spaced apart from each other along length directions of the first substrate and the second substrate, respectively.

### (Technique 9)

The lithium secondary battery according to any one of techniques 1 to 8, wherein the first spacer and the second spacer each contain a resin material.

### (Technique 10)

The lithium secondary battery according to any one of techniques 1 to 9, wherein the first spacer and the second spacer each include a non-porous structure that is impermeable to lithium ions.

### (Technique 11)

The lithium secondary battery according to any one of techniques 1 to 10, wherein the first substrate and the second substrate each include a porous sheet containing a polymer material.

### (Technique 12)

The lithium secondary battery according to any one of techniques 1 to 11, wherein each of the first substrate and the second substrate further include a composite material layer containing a resin material and inorganic particles.

### [Examples]

The lithium secondary battery according to the present disclosure will be more specifically described below with reference to Examples and Comparative Examples. The present disclosure, however, is not limited to the following Examples.

### <<Batteries A1, A2 and B1>>

### (Production of positive electrode)

A positive electrode active material, acetylene black (AB; conductive material), polyvinylidene fluoride (PVdF; binder), and an appropriate amount of N-methyl-2-pyrrolidone (NMP) were mixed, to prepare a positive electrode mixture slurry. For the positive electrode active material, a layered rock-salt type lithium-containing transition metal oxide (NCA: positive electrode active material) containing Li, Ni, Co, and Al (the molar ratio of Li to the total of Ni, Co, and Al being 1.0) was used. In the positive electrode mixture slurry, NCA:AB:PVdF = 95:2.5:2.5 by mass. The positive electrode mixture slurry was applied onto both surfaces of a belt-shaped Al foil (positive electrode current collector), and the applied films were dried and rolled, to form positive electrode mixture layers. The positive electrode current collector with the positive electrode mixture layers formed on both surfaces was cut in a predetermined size, to obtain a positive electrode.

### (Preparation of negative electrode current collector)

A belt-shaped electrolytic copper foil (thickness 12 µm) was prepared as a negative electrode current collector.

### (Production of substrate)

A 10-µm-thick microporous thin film made of polyethylene was prepared. An application liquid containing paraphenylene terephthalamide, which was as an aromatic polyamide, as a resin material, and alumina as inorganic particles was applied onto one principal surface of the microporous thin film. For the application liquid, an N-methyl-2-pyrrolidone solution containing 5.8 mass% of calcium chloride dissolved therein was used, which was adjusted to have an aromatic polyamide concentration of 2 wt% and an alumina concentration of 4 wt%. The substrate with the applied films formed thereon was left for 1 hour in an atmosphere at a temperature of 25 °C and a relative humidity of 70%, to allow the aromatic polyamide to deposit. Next, the NMP and the calcium chloride in the applied film were removed by washing with water. The applied film was dried at 60 °C for 5 minutes, to form a composite material layer (heat-resistant layer). In this way, a substrate having a microporous thin film and a composite material layer was obtained.

### (Formation of spacer on principal surface of substrate)

An application liquid containing polyvinylidene fluoride and alumina particles (inorganic filler) was applied onto the surface of the microporous thin film of the substrate, and the applied film was dried, to form a spacer having a pattern (stripe pattern) as illustrated in FIG. 5, 6 or 7. In this way, a separator having the substrate and the spacer was obtained.

### (Preparation of nonaqueous electrolyte)

An ether-based mixed solvent containing 1,2-dimethoxyethane (DME) and 1,1,2,2-tetrafluoroethyl 2,2,2-trifluoroethyl ether (CHF₂(CF₂OCH₂)CF₃) in a volume ratio of 1:2 was prepared. In the mixed solvent, lithium bissulfonylimide (LiFSI) was dissolved at a concentration of 1 mol/L, and LiBF₂(C₂O₄) was dissolved at a concentration of 0.1 mol/L, to prepare a liquid nonaqueous electrolyte (ether-based electrolyte solution).

### (Fabrication of battery)

In an inert gas atmosphere, the positive electrode and the negative electrode current collector were spirally wound with the separator interposed therebetween, to prepare an electrode group. In this way, a wound electrode group having a structure as illustrated in FIG. 2 was obtained. At this time, the wound electrode group was constituted such that the separator (substrate with the spacer disposed thereon) as illustrated in FIG. 5, 6 or 7 was dispose on the inner layer side and the outer layer side of the positive electrode. The positional relationship between the positive electrode and the linear-shaped protruding portions dispose on the inner layer side and the outer layer side of the positive electrode was as illustrated in FIG. 5, 6 or 7. The separator was disposed, with the principal surface of the substrate on which the spacer was formed faced the positive electrode. The electrode group was housed in a case main body having a bottomed cylindrical shape, into which the nonaqueous electrolyte was injected. A sealing body was placed at the opening of the case main body with a gasket interposed therebetween, to seal the electrode group and the nonaqueous electrolyte within the battery case. In this manner, a lithium secondary battery having the structure as illustrated in FIG. 1 was completed. In Table 1, A1 and A2 are of Examples, and B1 is of Comparative Example.

The positive electrode in the electrode group had the regions P1 to P5 (n = 5). For connection of the positive electrode to the positive electrode lead, a current collectorexposure portion was formed along the width direction, at a portion in the longitudinal direction of one of the regions P2 to P4. In the battery A1 (FIG. 5), the X1 (Y1) was 0.06, and each of the X2 to X5 (Y2 to Y5) was 0.12. In the battery A2 (FIG. 6), the X1 (Y1) was 0, and each of the X2 to X5 (Y2 to Y5) was 0.12. In the battery B1 (FIG. 7), the X1 to X5 (Y1 to Y5) were the same, each equal to 0.12.

### [Evaluation]

### (Charge-discharge test)

The obtained batteries were each subjected to a charge-discharge test. In the charge-discharge test, the battery was charged under the following conditions in a constant temperature bath at 25 °C, and then, after left to stand for 20 minutes, discharged under the following conditions.

### (Charging)

A constant-current charging was performed at a current of 10 mA per unit electrode area (square centimeter) until the battery voltage reached 4.1 V. Subsequently, a constantvoltage charging was performed at 4.1 V until the current per unit area of electrode reached 1 mA.

### (Discharging)

A constant-current discharging was performed at a current of 10 mA per unit electrode area (square centimeter) until the battery voltage reached 3.0 V.

With the above charging and discharging regarded as one cycle, charging and discharging were repeatedly performed, and when the charge capacity at the (m)th cycle was increased by 1% or more with respect to the charge capacity at the previous (m-1)th cycle, it was judged that an abnormal charge had occurred due to a minor internal short circuit, and the charge-discharge test was terminated. The number m of cycles at this time was determined as the number of cycles of abnormality occurrence. Charging and discharging were repeatedly performed until the discharge capacity reached 90% of the discharge capacity at the first cycle, and if no abnormal charge had occurred, it was judged as without abnormality.

The evaluation results are shown in Table 1.

**[Table 1]**

| battery | configuration | spacer | X1 (Y1) | minimum value among X2 to X5 (Y2 to Y5) | number of cycles of abnormality occurrence |
|---|---|---|---|---|---|
| A1 | positive electrode / spacer/ substrate/ negative electrode | FIG. 5 (stripe) | 0.06 | 0.12 | without abnormality |
| A2 | positive electrode / spacer/ substrate/ negative electrode | FIG. 6 (stripe) | 0 | 0.12 | 192 |
| B1 | positive electrode / spacer/ substrate/ negative electrode | FIG. 7 (stripe) | 0.12 | 0.12 | 115 |

In the batteries A1 and A2, as compared to the battery B1, the cycle at which abnormality had occurred was delayed, indicating that the occurrence of a minor internal short circuit was suppressed. Especially in the battery A1, which was without abnormality, the effect of suppressing the occurrence of an internal short circuit was remarkably obtained.

### [Industrial Applicability]

The lithium secondary battery of the present disclosure can be used in electronic devices, such as mobile phones, smartphones, and tablet terminals, electric cars including hybrids and plug-in hybrids, and home storage battery systems combined with a solar cell.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Reference Signs List]

10: lithium secondary battery, 11: positive electrode, 12: negative electrode, 14: electrode group, 14s: space, 15: case main body, 16: sealing body, 23: lower valve body, 25: upper valve body, 50: substrate, 51: porous sheet, 52: composite material layer, 53: spacer, 53a: protruding portion

## Claims

1. A lithium secondary battery, comprising:
an electrode group including a positive electrode, a negative electrode, and a separator disposed between the positive electrode and the negative electrode, which are wound together; and a nonaqueous electrolyte, wherein
at the negative electrode, lithium metal deposits during charging, and the lithium metal dissolves during discharging,
the separator includes a first separator disposed on an inner layer side of the positive electrode and a second separator disposed on an outer layer side of the positive electrode,
the first separator includes a sheet-like first substrate, and a first spacer disposed on a principal surface of the first substrate, the first spacer including a first protruding portion,
the second separator includes a sheet-like second substrate, and a second spacer disposed on a principal surface of the second substrate, the second spacer including a second protruding portion,
the positive electrode has a region PL at an Lth layer from a winding-start end portion of the positive electrode, and
when a ratio ALt/AL of an area ALt of a portion overlapping the first protruding portion in a region S1L in the first substrate facing an inner layer side of the region PL, to an area AL of the region S1L is denoted by XL,
a ratio BLt/BL of an area BLt of a portion overlapping the second protruding portion in a region S2L in the second substrate facing an outer layer side of the region PL, to an area BL of the region S2L is denoted by YL, and
values of the XL and the YL corresponding to the regions P1 to Pn where L = 1 to n (n is an integer of 3 or more) are represented by X1 to Xn and Y1 to Yn, respectively,
the X1 is smaller than at least one of the X2 to Xn, and
the Y1 is smaller than at least one of the Y2 to Xn.

2. The lithium secondary battery according to claim 1, wherein
the X1 is smaller than any of the X2 to Xn, and
the Y1 is smaller than any of the Y2 to Yn.

3. The lithium secondary battery according to claim 1, wherein
the X1 is 0 or more and 0.5 or less, and
the Y1 is 0 or more and 0.5 or less.

4. The lithium secondary battery according to claim 1, wherein the first protruding portion and the second protruding portion are both disposed so as not to overlap a winding-start end portion of the positive electrode.

5. The lithium secondary battery according to any one of claims 1 to 4, wherein neither the first protruding portion nor the second protruding portion are disposed further inward than the winding-start end portion of the positive electrode.

6. The lithium secondary battery according to any one of claims 1 to 4, wherein the first spacer and the second spacer are disposed on a principal surface facing the positive electrode of the first substrate and a principal surface facing the positive electrode of the second substrate, respectively.

7. The lithium secondary battery according to any one of claims 1 to 4, wherein the first spacer and the second spacer include the first protruding portion disposed in a predetermined repeating pattern and the second protruding portion disposed in a predetermined repeating pattern, respectively.

8. The lithium secondary battery according to any one of claims 1 to 4, wherein a plurality of the first protruding portions which are linear shaped and a plurality of the second protruding portions which are linear shaped are disposed in parallel to and spaced apart from each other along length directions of the first substrate and the second substrate, respectively.

9. The lithium secondary battery according to any one of claims 1 to 4, wherein the first spacer and the second spacer each contain a resin material.

10. The lithium secondary battery according to any one of claims 1 to 4, wherein the first spacer and the second spacer each include a non-porous structure that is impermeable to lithium ions.

11. The lithium secondary battery according to any one of claims 1 to 4, wherein the first substrate and the second substrate each include a porous sheet containing a polymer material.

12. The lithium secondary battery according to claim 11, wherein each of the first substrate and the second substrate further include a composite material layer containing a resin material and inorganic particles.
